# EUROPEAN PATENT APPLICATION

(11) **EP 1 873 857 A1**
(43) Date of publication of application: **02.01.2008**
(21) Application number: 06729962.8
(22) Date of filing: 24.03.2006
(51) Int. Cl.: H01M 8/04, H01M 8/10

(54) **LIQUID FILLING DEVICE FOR FUEL CELL, FUEL CELL, AND FUEL CARTRIDGE**

(30) Priority: 30.03.2005 JP 2005099465; 26.04.2005 JP 2005128360
(71) Applicant: KABUSHIKI KAISHA TOSHIBA, Tokyo 105-8001 (JP)
(72) Inventor: TAKAHASHI, Kenichi, Toshiba Corporation,, Minato-ku, Tokyo 105-8001, (JP); KAWAMURA, Koichi, Toshiba Corporation,, Minato-ku, Tokyo 105-8001, (JP); YASUI, Hideaki, Toshiba Corporation,, Minato-ku, Tokyo 105-8001, (JP); HASEBE, Hiroyuki, Toshiba Corporation,, Minato-ku, Tokyo 105-8001, (JP)
(74) Representative: Henkel, Feiler & Hänzel
(86) International application number: PCT/JP2006/306014
(87) International publication number: WO 2006/109537

(57) **Abstract**

The structure includes protrusions 30, 62, 63 provided in either injection ports 20, 20A, 20B or cartridge nozzles 6, 6A, 6B, and grooves 6g, 32, 33 formed in either the injection ports or the cartridge nozzles so as to be fitted with the protrusions, fitted with the protrusions when the cartridge nozzles are inserted into the injection ports, and guiding the protrusions when the cartridge nozzles are further pushed in an axial direction.

## Description

### Technical Field

The present invention relates to a liquid injection device of a fuel cell for injecting liquid fuel such as high concentration methanol safely from a cartridge into a small-sized fuel cell used as a built-in power source for mobile devices such as portable telephone, portable audio set, notebook personal computer, and portable game machine, and to a fuel cell and a fuel cartridge.

### Background Art

A solid electrolyte type fuel cell has been attracting attention as a power source for portable telephone or the like, and has been intensively developed for practical use. Concepts of development include small size, flat shape, high output by small power consumption, and compatibility for replenishing liquid fuel in a cell main body of any manufacturer by simple operation by using a cartridge easily available wherever to any user. To produce a high output, a fuel of high power generation efficiency is demanded, and a high concentration methanol solution is most hopeful as this fuel. For example, Japanese Patent No. 3413111 proposes a fuel cell using high concentration methanol as fuel.

When high concentration methanol solution is used as fuel, the system is not opened but is closed, and auxiliary mechanisms are incorporated inside, such as fuel pump, intake pump and fuel concentration sensor, so that the fuel should be consumed only inside of the battery. Since high concentration methanol has a low boiling point, it is easily evaporated and dissipates, and its vapor may be inhaled by a user. Therefore, it cannot be exposed to an atmosphere from the viewpoint of safety and health.

In particular, in a satellite type cartridge, that is, one cartridge possibly used by plural devices, compatibility and prevention of wrong use are important and contradictory problems.

However, if a tank in a fuel cell becomes empty during use and when refilling the fuel cell tank with liquid fuel from a cartridge, the system is temporarily opened, by opening a liquid discharge port of the cartridge or opening a liquid injection port of the cell main body, and thus high concentration methanol may escape outside. From the viewpoint of safety and health, the high concentration methanol should never escape outside even when refilling the fuel. Since the fuel is refilled by a user, there is a demand for a mechanism, easily handled by anyone, for refilling the fuel safely and securely without causing liquid leak.

### Disclosure of Invention

The invention has been devised to solve these problems, and it is hence an object thereof to provide a liquid injection device of a fuel cell, a fuel cell, and a fuel cartridge having compatibility, and capable of injecting liquid such as high concentration methanol safely in a fuel cell, without causing liquid leak, by simple operation.

A liquid injection device of a fuel cell which inserts a cartridge nozzle in an injection port of a fuel cell main body, pushes in the nozzle to open both a valve of the nozzle and a valve of the injection port, and injects liquid into the fuel cell from the cartridge through the nozzle and the injection port, the device comprising:
a protrusion provided in either the injection port or the cartridge nozzle; and
a groove provided in either the injection port or the cartridge nozzle so as to be fitted with the protrusion, fitted with the protrusion when the cartridge nozzle is inserted into the injection port, and guiding the protrusion when the cartridge nozzle is pushed into an axial direction.

A fuel cell having an injection port into which a nozzle of a fuel cartridge is inserted for replenishing liquid fuel, comprising:
a bayonet coupler element provided in an inner peripheral wall which defines the injection port, fitted to an outer circumference of the nozzle when the nozzle of the fuel cartridge is inserted into the injection port, and guiding the nozzle when the nozzle is further pushed in an axial direction.

A fuel cartridge provided with a nozzle to be inserted into an injection port of a fuel cell for replenishing liquid fuel, comprising:
a bayonet coupler element provided in an outer peripheral wall of the nozzle, fitted to an inner circumference of the injection port when the nozzle is inserted into the injection port of the fuel cell, and guided into the injection port when the nozzle is further pushed in an axial direction.

In the invention, the cartridge nozzles are different at least in one of the number, shape and position of protrusions or grooves, to individually identify contained liquids. As a result, the cartridges can be individually identified. For example, on the basis of the number, shape and position of protrusions or grooves, the type and concentration of the liquid contained in the cartridge can be identified. Specifically, the means for varying the protrusion or groove shape may include variation of single or plural protrusions or grooves in a circumferential direction (see FIGS. 19A to 26D). The means for varying the protrusion or groove position may include symmetrical configuration of plural protrusions or grooves with respect to a central axis of the cartridge (see FIGS. 21A to 21C, FIGS. 22A to 22C, FIGS. 25A to 25D, and FIGS. 26A to 26D), or asymmetrical configuration (see FIGS. 23A to 23D and FIGS. 24A to 24D).

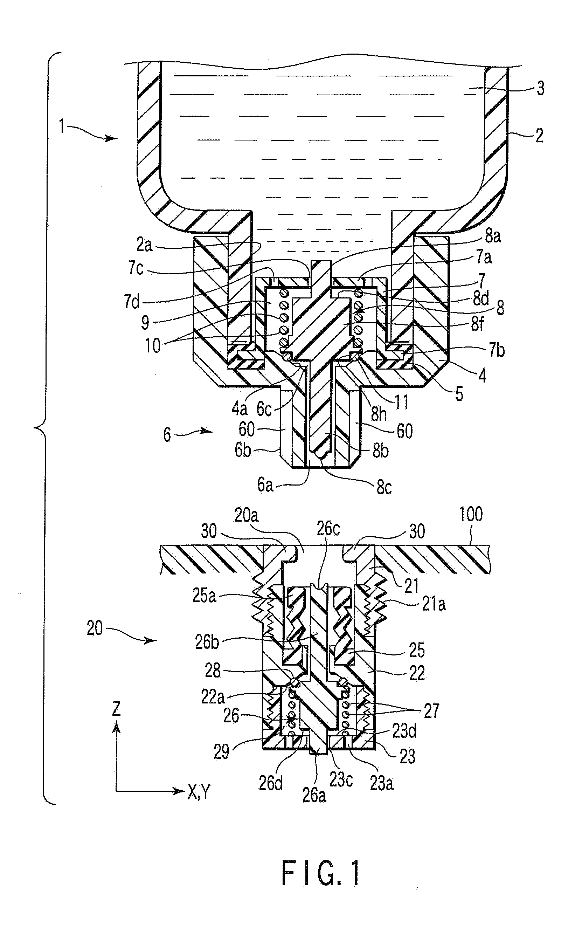

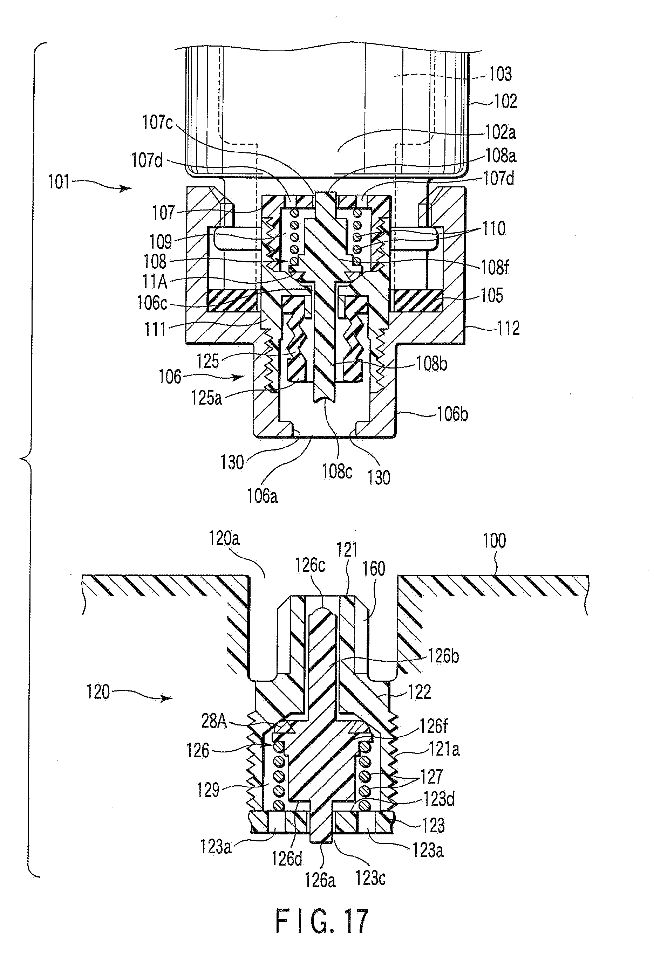

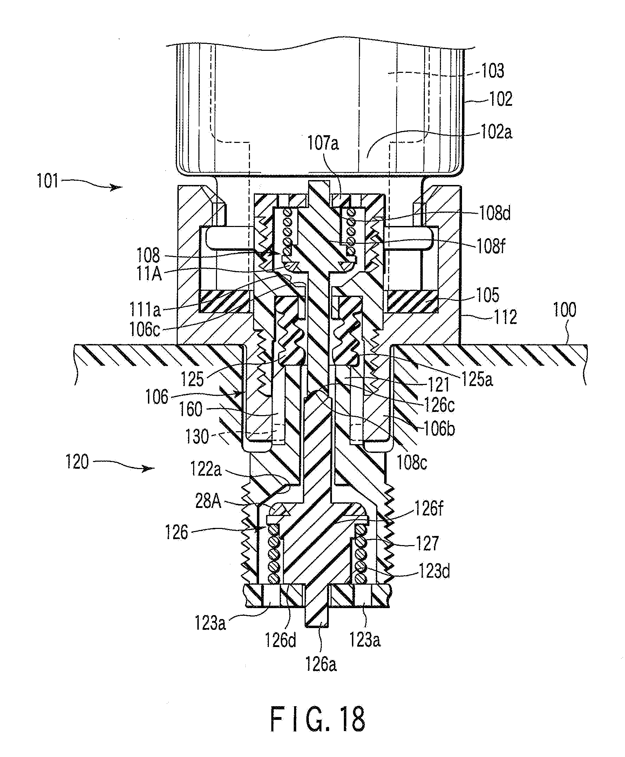

A cartridge nozzle of male type may be combined with a liquid injection port of female type of the cell main body (see FIGS. 1 to 5), or, to the contrary, a cartridge nozzle of female type may be combined with a liquid injection port of male type of the cell main body (see FIGS. 17 and 18). The cartridge nozzle of male type can be easily identified from outside by its protrusion or groove, but it is exposed to outer circumference and thus may be weak structurally. In particular, when a protrusion is formed on the male type cartridge nozzle, the strength must be reinforced by using a metal material or the like so as not to be hit and broken by other members. The cartridge nozzle of female type has the protrusion or groove provided inside and is generally rigid, and there is no problem in strength if made of resin, but it is hard to identify the protrusion or groove from outside. In particular, when a groove is formed in the cartridge nozzle of female type, it is more difficult to identify. Hence, preferably, a groove is formed in the cartridge nozzle of male type, and a protrusion is formed in the cartridge nozzle of female type.

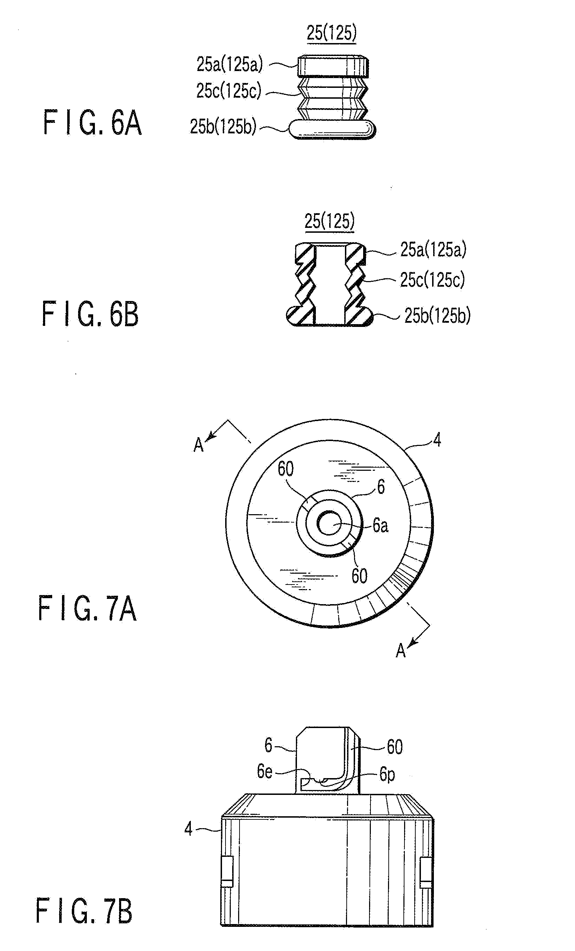

In the invention, the groove and protrusion may be provided at either the cell main body side or the cartridge side, but most preferably the protrusion is formed inside of the injection port of the cell main body side, and the groove is formed on the nozzle outer circumference of the cartridge side (see FIGS. 7A to 10B). This is because the protrusion at the inner circumference of the injection port does not project outward, and thus it is hardly hit or broken as compared with the protrusion on the outer circumference of the cartridge nozzle, and it is less likely to be damaged.

The groove is preferably provided with a lock function for guiding the protrusion in the axial direction, and displacing and guiding the protrusion in the circumferential direction so that the cartridge nozzle may be locked in the liquid injection port. As a result, the nozzle is not detached from the injection port while injecting the liquid, and the liquid can be injected into the fuel cell safely and securely.

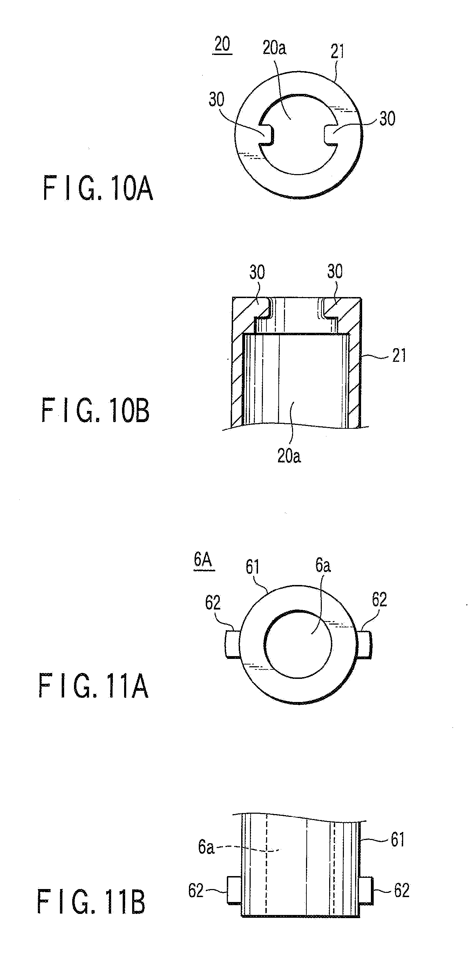

In the invention, near the terminal end of the groove, there is preferably a small protrusion (bud) projecting from the side peripheral wall of the groove and ridden over by the protrusion guided along the groove (see FIGS. 7A and 9). As a result, the fitting is not easily detached, and the user can feel the click (locking sense) of riding over the small protrusion such as fitting of cap and bottle at his/her fingertip, and completion of connection can be securely felt physically.

Preferably, wet ends of the injection port and cartridge nozzle contacting with the liquid are made of resin, and dry ends of the injection port and cartridge nozzle not contacting with the liquid are made of materials stiffer than resin. The wet ends are made of rigid resin or plastic not causing swelling or crack in contact with high concentration methanol, such as polyether ether ketone (PEEK), polyphenylene sulfide (PPS), polybutylene terephthalate (PBT), polyethylene terephthalate (PET), liquid crystal polymer (LCP), and polyacetal (POM).

If a metal material is used in a portion contacting with high concentration methanol, cations dissolved in a methanol solution have adverse effects on battery performance, and therefore a nonmetallic material such as resin material is used at the wet ends. On the other hand, the dry ends are made of metal or alloy having corrosion resistance to high concentration methanol, such as austenitic stainless steel (SUS304, etc.), titanium or titanium alloy, nickel alloy, nickel-chromium alloy, nickel-chromium-molybdenum alloy, and aluminum alloy. Using iron or copper excellent in machinability, after machining, the resin may be coated with a metal of high corrosion resistance. In particular, when the protrusion is provided in the dry ends, the protrusion may be made of a metal material. Accordingly, the strength of the protrusion can be improved, and an excellent durability is obtained in repeated attaching and detaching strokes of the cartridge (nozzle).

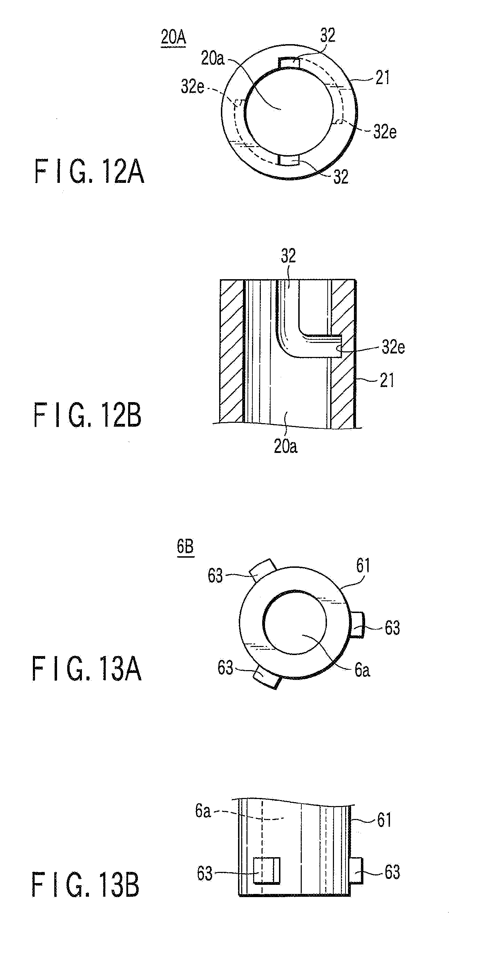

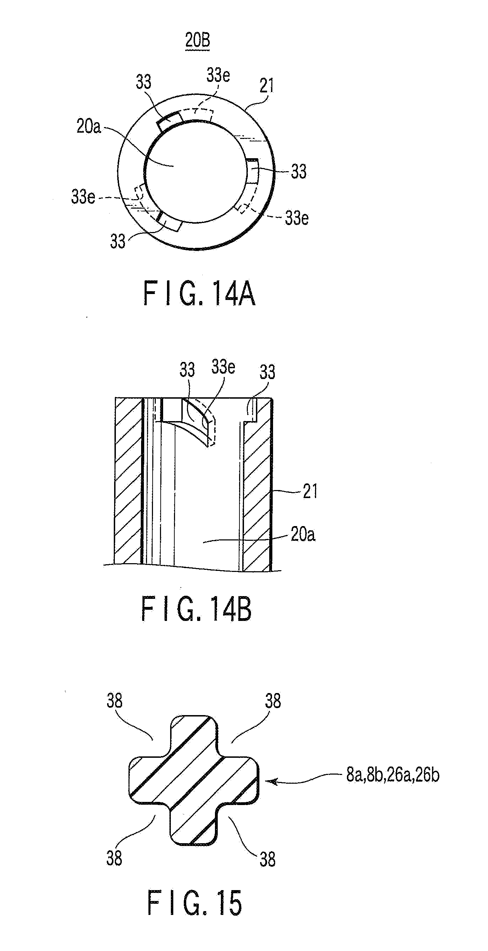

The groove is formed of a plurality of grooves distributed from the axial center of the injection port or cartridge nozzle, and along the inner circumference of the injection port or the outer circumference of the cartridge nozzle, terminal ends are preferably rotated and displaced by 45 degrees to 90 degrees in the circumferential direction with respect to the starting ends. The number of grooves is preferably 2 or 3, but may be 1 or 4. The profile of the groove is preferably in a figure of L, a figure of inverted L, a figure of J, a figure of inverted J, or oblique and straight (spiral linear), in the shape of two-dimensional projection plane from the side direction (see FIGS. 12A, 12B, 14A, and 14B). By defining the profile in such a shape, the cartridge nozzle is not easily detached from the injection port while injecting fuel, the safety is improved, the sealing performance of the groove and protrusion is improved, and the liquid leak prevention effect is further enhanced.

The injection port is provided behind the protrusion or groove so as to contact with the leading end of the nozzle when the cartridge nozzle is inserted into the injection port, and is further desired to have an elastic holder which is deformed elastically while keeping sealing performance when the nozzle is further pushed in the axial direction (see FIGS. 1 to 5, 17, and 18). The elastic holder may be manufactured by using thermoplastic synthetic rubber or elastomer of various hardness levels. By pushing in the nozzle, the elastic holder is deformed elastically to seal tightly with the nozzle leading end, and then a valve of the cartridge nozzle side, and a valve of the injection port of the cell main body side are both opened, so that the liquid fuel can flow from the cartridge side to the cell main body side. The elastic holder is preferred to be of bellows shape so as to assure a liquid passage when the shape of the holder is compressed by pushing of the nozzle, and to be deformed elastically while keeping a proper shape for the liquid passage (see FIGS. 6A and 6B).

The opening sequence of the valve of the cartridge nozzle side and the valve of the injection port of the cell main body side, that is, the opening and closing order of the valves depends on the relative magnitude of spring coefficients of compression springs biasing the valves. When the spring coefficient of the compression spring of the cartridge nozzle side is greater than that of the cell main body side, the valve of the cell main body side opens first, and then the valve of the cartridge side opens later. On the other hand, when the spring coefficient of the compression spring of the cell main body side is greater than that of the cartridge nozzle side spring, the valve of the cartridge nozzle side opens first, and then the valve of the cell main body side opens later.

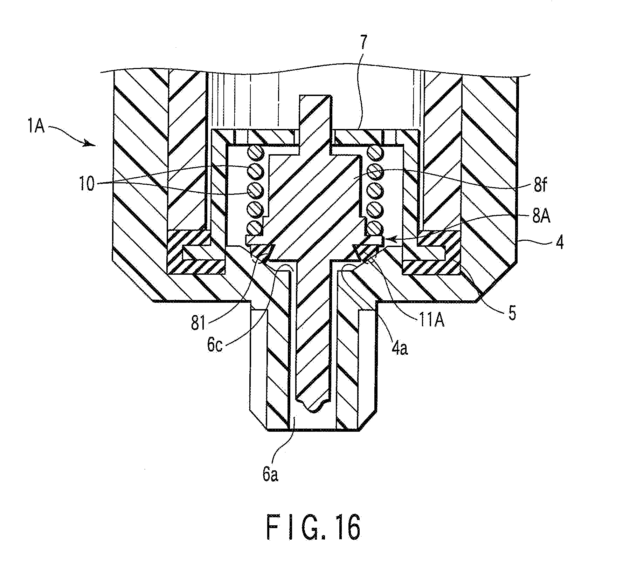

In the invention, it is further desired to have a tapered holding groove formed in the valve body of the cartridge nozzle valve, and a seal ring of irregular section held by this holding groove (see FIGS. 16 to 18). By forming in such a shape, the seal ring is not easily detached from the valve body.

It is also desired to have a first needle disposed in the passage of the cartridge nozzle as part of the valve body of the cartridge nozzle valve, and having a convex or concave leading end, and a second needle disposed in the passage of the injection port as part of the valve body of the injection port valve, and having a convex or concave leading end to be fitted with the leading end of the firs needle (see FIGS. 1, 2, 17, and 18). In the liquid injection device of the invention, to prevent leakage of liquid and vapor, the passage of the cartridge nozzle and the passage of the cell main body injection port are made as narrow as possible, and a thin and slender needle is inserted in each of the narrow passages. As a result, the abutting areas of needle leading ends are very small, and the both needles tend to come offset when pushing the nozzle. If pushed continuously in the offset state, a passage may not be assured. Hence, the needle leading end of one side is convex, and the needle leading end of the other side is concave, so that the former can fit into the latter securely. As a result, offset is prevented, and the both needles are designed to operate coaxially.

Preferably, the first and second needles have concave grooves extending in the longitudinal direction, a first passage for passing the liquid is formed between the recess in the first needle and the inner peripheral wall of the cartridge nozzle, and a second passage for passing the liquid is formed between the recess in the second needle and the inner peripheral wall of the injection port (see FIG. 15). Instead of the recess, a groove may be cut in the needle. A similar recess or groove is preferably formed in a guide pin projecting from the valve body of the opposite side of the needle (see FIGS. 1 and 15).

### Brief Description of Drawings

FIG. 1 is an internal see-through sectional view of a liquid injection device of a fuel cell of the invention.

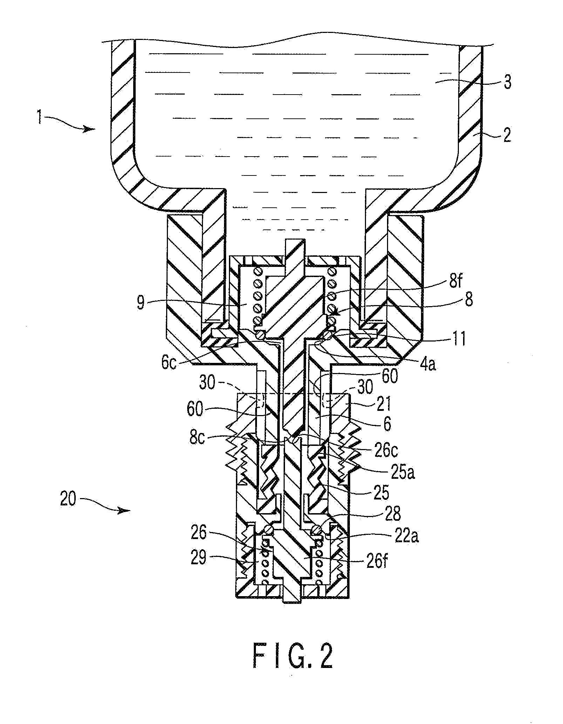

FIG. 2 is an internal see-through sectional view of a liquid injection device in a first stage having a cartridge nozzle (male type having groove in outer circumference) inserted in an injection port (female type having protrusion in inner circumference) of a fuel cell.

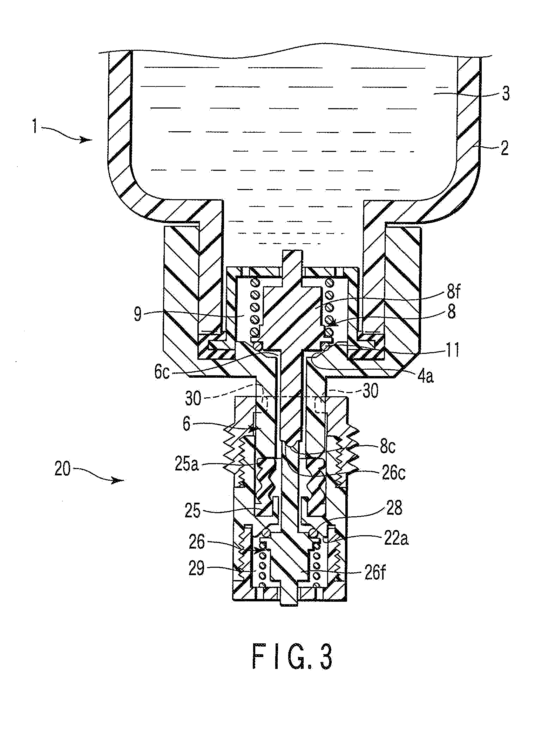

FIG. 3 is an internal see-through sectional view of a liquid injection device in a second stage having a cartridge nozzle pushed into an injection port of a fuel cell.

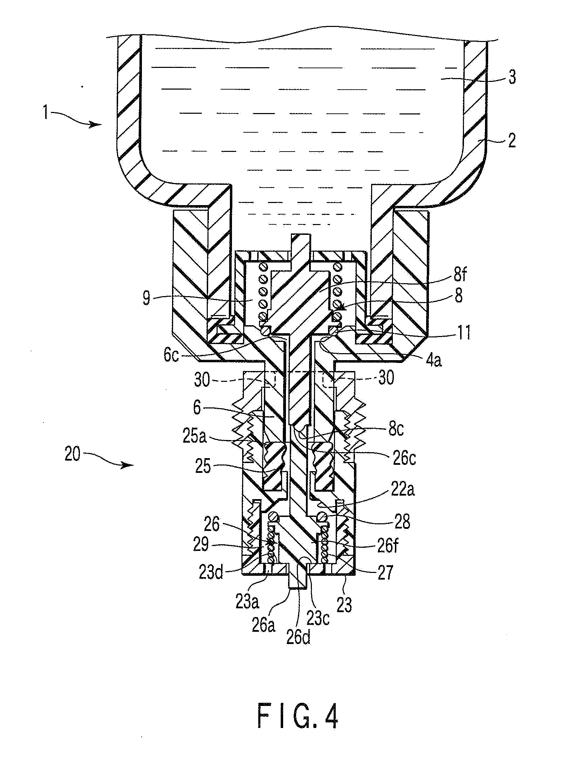

FIG. 4 is an internal see-through sectional view of a liquid injection device in a third stage having a cartridge nozzle pushed further into an injection port of a fuel cell.

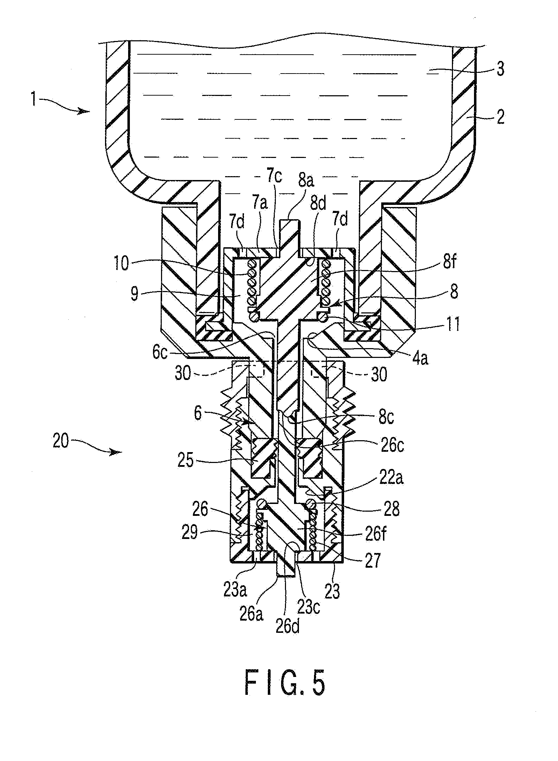

FIG. 5 is an internal see-through sectional view of a liquid injection device in a fourth stage having a cartridge nozzle pushed further into an injection port of a fuel cell.
FIG. 6A is an outline view of an elastic holder.
FIG. 6B is a sectional view of the elastic holder.
FIG. 7A is a plan view of a cartridge nozzle.
FIG. 7B is a side view of the cartridge nozzle of FIG. 7A.

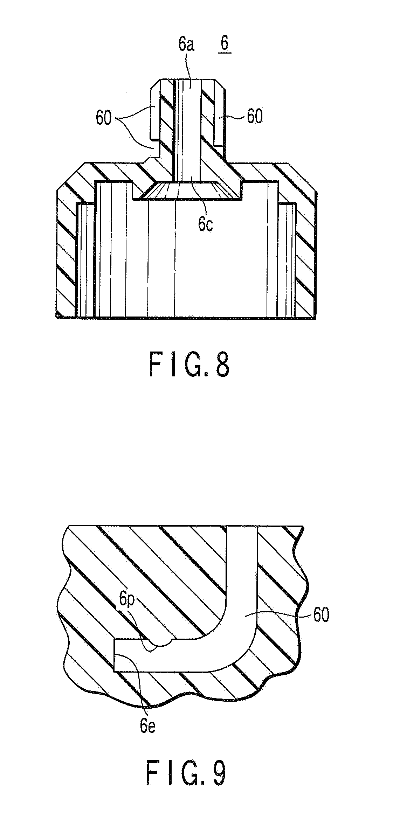

FIG. 8 is a longitudinal sectional view of the cartridge nozzle.
FIG. 9 is a magnified sectional view of a groove formed in an outer circumference of the cartridge nozzle.
FIG. 10A is a plan sectional view of an injection port of a fuel cell tank side.
FIG. 10B is a longitudinal sectional view of the injection port of FIG. 10A.
FIG. 11A is a plan view of a cartridge nozzle (male type having protrusion in outer circumference) in another embodiment.
FIG. 11B is a side view of the cartridge nozzle of FIG. 11A.
FIG. 12A is a plan view of an injection port of a fuel cell side (female type having groove in inner circumference) in another embodiment.
FIG. 12B is a longitudinal sectional view of the injection port of FIG. 12A.
FIG. 13A is a plan view of a cartridge nozzle (male type having protrusion in outer circumference) in another embodiment.
FIG. 13B is a side view of the cartridge nozzle of FIG. 13A.
FIG. 14A is a plan view of an injection port of a fuel cell side (female type having groove in inner circumference) in another embodiment.
FIG. 14B is a longitudinal sectional view of the injection port of FIG. 14A.
FIG. 15 is a sectional view of a needle of a coupler valve.
FIG. 16 a partially magnified sectional view of a valve portion of a cartridge in another embodiment.
FIG. 17 is an internal see-through sectional view of a liquid injection device of a fuel cell in another embodiment of the invention.
FIG. 18 is an internal see-through sectional view of a liquid injection device in another embodiment when it is ready to inject liquid by connecting a cartridge nozzle into an injection port of a fuel cell.

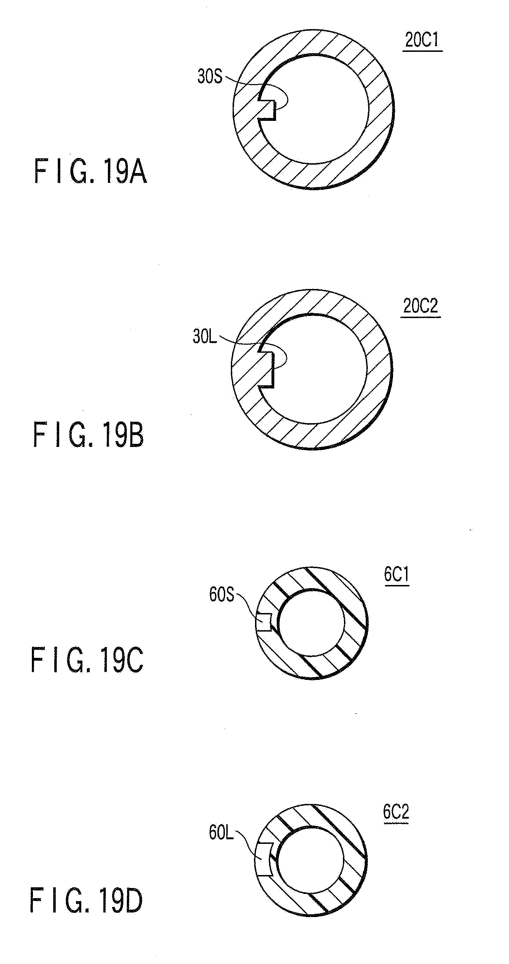

FIG. 19A is a plan sectional view of a cell main body side coupler (female type injection port) having a protrusion in an inner circumference.
FIG. 19B is a plan sectional view of a cell main body side coupler (female type injection port) having a protrusion in an inner circumference.
FIG. 19C is a plan sectional view of a cartridge side coupler (male type cartridge nozzle) having a groove in an outer circumference.
FIG. 19D is a plan sectional view of a cartridge side coupler (male type cartridge nozzle) having a groove in an outer circumference.

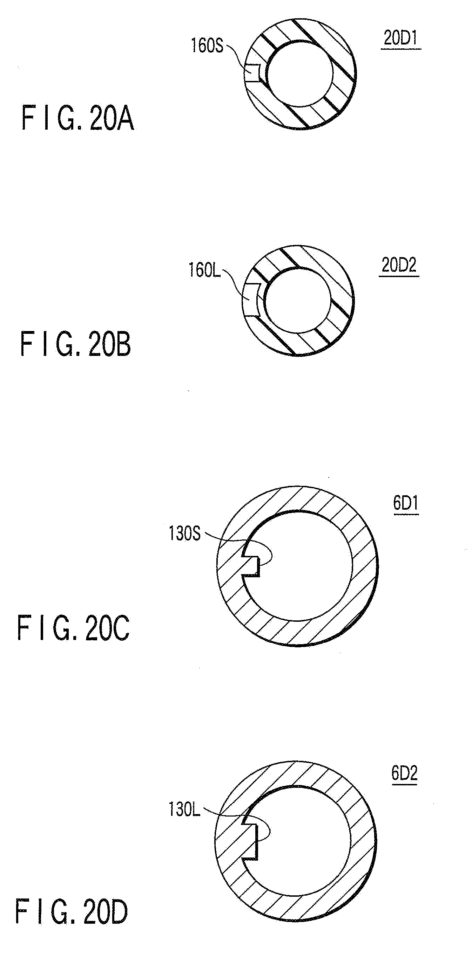

FIG. 20A is a plan sectional view of a cell main body side coupler (male type injection port) having a groove in an outer circumference.
FIG. 20B is a plan sectional view of cell main body side coupler (male type injection port) having groove in an outer circumference.
FIG. 20C is a plan sectional view of a cartridge side coupler (female type cartridge nozzle) having a protrusion in an inner circumference.
FIG. 20D is a plan sectional view of a cartridge side coupler (female type cartridge nozzle) having a protrusion in an inner circumference.

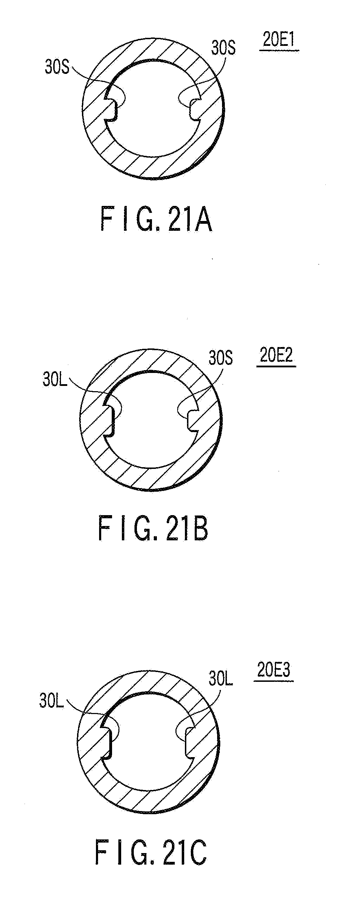

FIG. 21A is a plan sectional view of a cell main body side coupler having a pair of right and left symmetrical protrusions in an inner circumference.
FIG. 21B is a plan sectional view of a cell main body side coupler having a pair of right and left symmetrical protrusions in an inner circumference.
FIG. 21C is a plan sectional view of a cell main body side coupler having a pair of right and left symmetrical protrusions in an inner circumference.

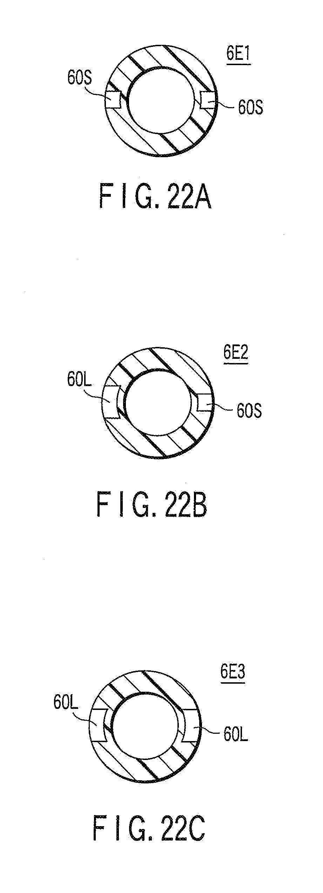

FIG. 22A is a plan sectional view of a cartridge side coupler having a pair of right and left symmetrical grooves in an outer circumference.
FIG. 22B is a plan sectional view of a cartridge side coupler having a pair of right and left symmetrical grooves in an outer circumference.
FIG. 22C is a plan sectional view of a cartridge side coupler having a pair of right and left symmetrical grooves in an outer circumference.

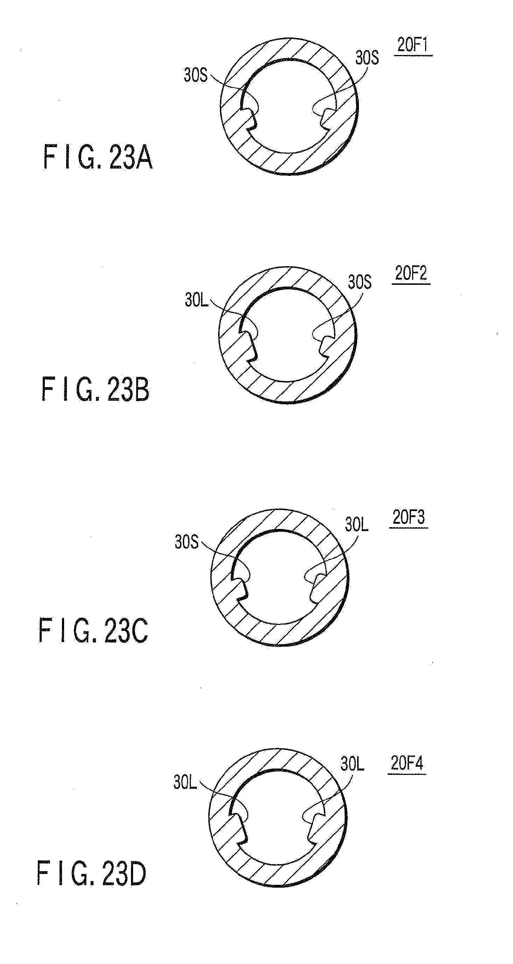

FIG. 23A is a plan sectional view of a cell main body side coupler having a pair of asymmetrical protrusions in an inner circumference.
FIG. 23B is a plan sectional view of a cell main body side coupler having a pair of asymmetrical protrusions in an inner circumference.
FIG. 23C is a plan sectional view of a cell main body side coupler having a pair of asymmetrical protrusions in an inner circumference.
FIG. 23D is a plan sectional view of a cell main body side coupler having a pair of asymmetrical protrusions in an inner circumference.

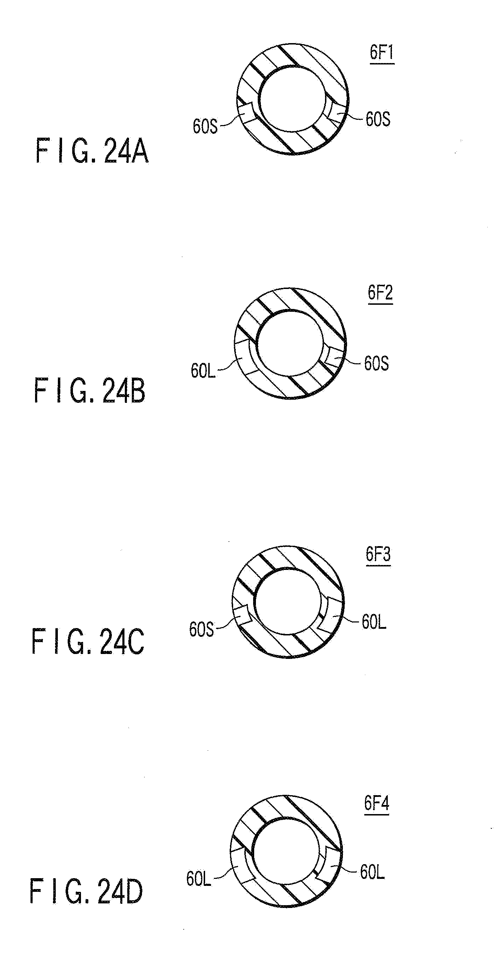

FIG. 24A is a plan sectional view of a cartridge side coupler having a pair of asymmetrical grooves in an outer circumference.
FIG. 24B is a plan sectional view of a cartridge side coupler having a pair of asymmetrical grooves in an outer circumference.
FIG. 24C is a plan sectional view of a cartridge side coupler having a pair of asymmetrical grooves in an outer circumference.
FIG. 24D is a plan sectional view of a cartridge side coupler having a pair of asymmetrical grooves in an outer circumference.

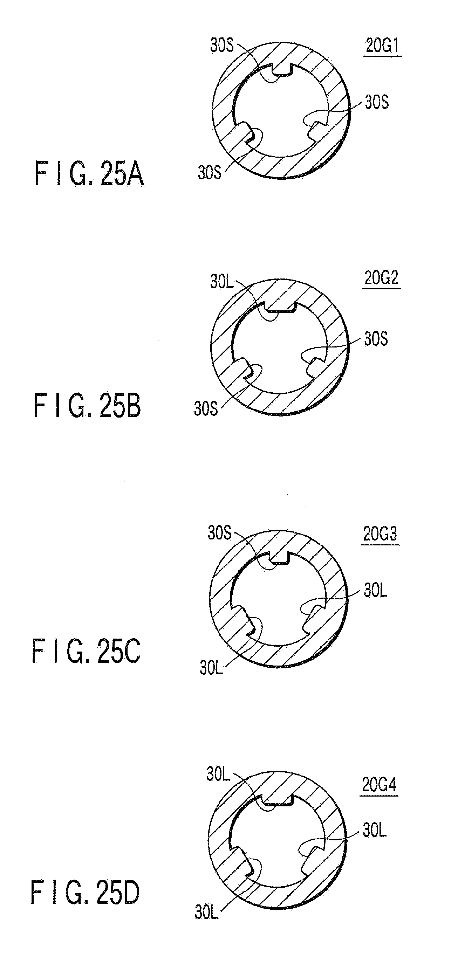

FIG. 25A is a plan sectional view of a cell main body side coupler having three symmetrical protrusions in an inner circumference.
FIG. 25B is a plan sectional view of a cell main body side coupler having three symmetrical protrusions in an inner circumference.
FIG. 25C is a plan sectional view of a cell main body side coupler having three symmetrical protrusions in an inner circumference.
FIG. 25D is a plan sectional view of a cell main body side coupler having three symmetrical protrusions in an inner circumference.

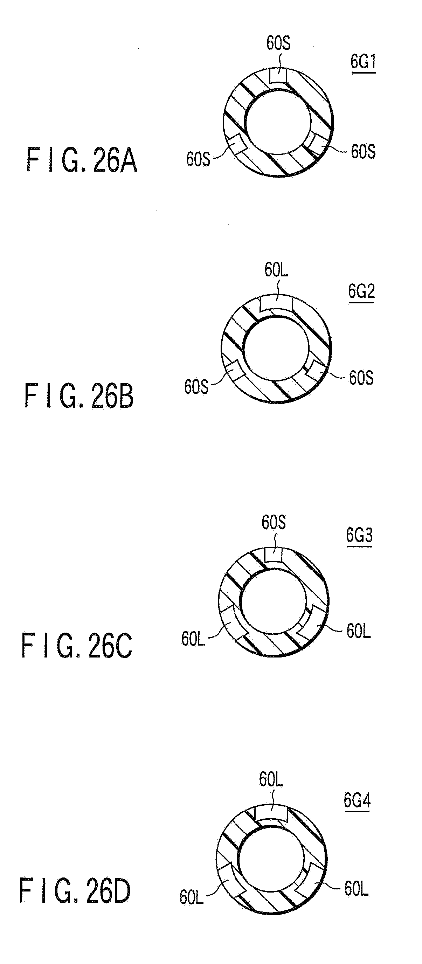

FIG. 26A is a plan sectional view of a cartridge side coupler having three symmetrical grooves in an outer circumference.
FIG. 26B is a plan sectional view of a cartridge side coupler having three symmetrical grooves in an outer circumference.
FIG. 26C is a plan sectional view of a cartridge side coupler having three symmetrical grooves in an outer circumference.
FIG. 26D is a plan sectional view of a cartridge side coupler having three symmetrical grooves in an outer circumference.

### Best Mode for Carrying Out the Invention

Referring now to the accompanying drawings, preferred embodiments of the invention will be described below.

A liquid injection device of a fuel cell of the invention is a combination of a cartridge 1 and an injection port 20 of a fuel cell main body 100 side as shown in FIG. 1. In addition, as shown in FIGS. 2 to 5, a cartridge nozzle 6 as a cartridge side coupler is inserted into a liquid inlet 20a of the injection port as a main body side coupler, and high concentration methanol solution as liquid fuel is supplied into a tank (not shown) in the fuel cell main body.

The cartridge 1 includes a container 2 for defining a containing space 3 of high concentration methanol as liquid fuel, a cartridge base 4 provided so as to surround an opening 2a formed at one end side of the container 2, and a cartridge nozzle 6 provided at the container opening 2a. The container 2 may be formed in various shapes, including cylinder, spindle, flat tube, and square tube. The cartridge base 4 and the cartridge nozzle 6 are integrally molded, and the cartridge nozzle 6 is extended outward from the cartridge base 4. The integrally molded body of base 4 and nozzle 6, the container opening 2a, and a plug 7 are mutually sealed by a rubber packing 5 of U-section.

The cartridge nozzle 6 has a nozzle main body 6b, a valve 8, the plug 7, a compression spring 10, and a seal ring 11. In the outer circumference of the nozzle main body 6b, a groove 60 is cut as a bayonet coupler element. A needle (valve stem) 8B of the valve 8 is inserted in an internal passage of the nozzle main body 6b. The plug 7 surrounds a valve body 8f of the valve 8, and defines a valve compartment space 9. The compression spring 10 biases the valve body 8f toward a valve seat 4a. The seal ring 11 is held in a holding groove 8h of the valve body 8f, and is pushed against the valve seat 4a by the biasing force of the compression spring 10. When the seal ring 11 is forcibly separated from the valve seat 4a, a liquid inlet 6c is opened, and the liquid flows into a liquid outlet 6a.

The plug 7 is formed like a hat or cup shape, and a flange 7b is detachably held in the cartridge base 4 by way of the rubber packing 5. The plug 7 is a thin wall resin (made of, for example, PEEK), and has a certain flexibility. To assemble these components, the valve 8 is incorporated in the plug 7, the flange 7b of the plug 7 is fitted into the rubber packing 5 adhered to the cartridge base 4, and the cartridge base 4 is adhered to the container opening 2a, and/or crimped and/or screwed.

The valve 8 has the valve body 8f, the needle (valve stem) 8b, and a guide pin 8a. The holding groove 8h is formed at the front end of the valve body 8f (lower side in the drawing), and the seal ring 11 is held by this holding groove 8h. The needle 8b is projecting like needle or bar from the front end side of the valve body 8f (lower side in the drawing). The needle 8b functions as a valve stem, and is elevatably inserted in the passage in the nozzle 6. The length of the needle 8b is nearly equal to the overall length of the passage of the nozzle 6. However, while the cartridge 1 is not connected to the cell main body 110, that is, in non-use state, a preferred length is designed such that a leading end 8c of the needle is slightly withdrawn from the liquid outlet 6a of the nozzle. It is hence effective to avoid damage of the needle leading end 8c, prevent invasion of foreign matter such as dust into the nozzle passage from the liquid outlet 6a, and prevent accidental opening of the valve.

The guide pin 8a projects from the rear end of the valve body 8f (upper side in the drawing) toward the container 2, and protrudes into the liquid storage space 3 at the container side by way of a hole 7c in the upper center of the plug 7. A plurality of communication holes 7d are opened in an upper plate 7a of the plug, so that the liquid fuel flows into the valve compartment space 9 from the liquid storage space 3 through the communication holes 7c, 7d.

A stopper 8d is provided at the rear end of the valve body 8f, and an ascending stroke is defined for allowing the valve body 8f to move in the axial direction (Z-direction). That is, when a force exceeding the biasing force of the compression spring 10 is loaded to the valve body 8f, (the seal ring 11 is separated from the valve seat 4a, the liquid inlet 6c is released, and the valve compartment space 9 communicates with the liquid outlet 6a of the nozzle,) the valve body 8f is not elevated limitlessly, but the stopper 8d abuts against the upper plate 7a of the plug, so that the elevation of the valve body 8f is stopped.

The compression spring 10 is made of stainless steel wire rod for spring SUS304-WPB of 4 mm in diameter specified in JIS G 4314, electroplated with pure gold (purity 99.9%) having corrosion resistance to high concentration methanol, and its spring coefficient is adjusted to a predetermined magnitude. Other base materials of the compression spring 10 include stainless steel wire for spring (SUS316-WPA), stainless steel strip for spring (SUS631J1-WPC), beryllium steel for spring (JIS G 3130 C1720W), phosphor bronze (JIS C 3130 C5191W), titanium wire material, and other corrosion resistant metal materials. The plating materials include, aside from gold (Au), platinum (Pt), rhodium (Rh), and titanium capable of forming a rigid oxide film, but other various nonmetallic materials may also be used. Such examples include carbon, polyethylene terephthalate (PET), polypropylene (PP), polycarbonate (PC), and other resins excellent in methanol resistance, and these resins may be used as compression spring wire materials. As a nonmetallic coating layer, carbon (for example, diamond-like carbon coating (DLCC)), fluorine, and other resin coating may be used. As a result, metallic cations are not dissolved from the liquid ends contacting with high concentration methanol solution, and deterioration of battery characteristics due to entry of cations can be prevented. One end of the compression spring 10 is affixed to the inside of the upper plate 7a of the plug, and the other end thereof is affixed to the small flange of the valve body 8f.

The seal ring 11 is made of thermoplastic synthetic rubber or elastomer not swelling or dissolving in high concentration methanol, and is formed as an O-ring of circular section. The seal ring 11 is fitted into the holding groove 8h of the valve body 8f.

The injection port 20 of the fuel cell main body side will be explained below.

The injection port 20 includes an upper member 21, an intermediate member 22, a lower member 23, a rubber holder 25, a valve 26, a compression spring 27, a seal ring 28, and a plurality of protrusions 30 as bayonet coupler elements(key-key way coupling joint elements). The upper member 21, intermediate member 22, and lower member 23 are nearly the same in diameter, and are joined coaxially. The upper member 21 is engaged with one end of the intermediate member 22, and the lower member 23 is engaged with the other end of the intermediate member 22. The upper member 21, intermediate member 22, and lower member 23 are integrated into an assembly, which is screwed into a fuel cell main body (not shown), and the entire structure is buried in the fuel cell main body. Inside the fuel cell main body (not shown), a fuel tank is provided, and the valve compartment space 29 defined by the lower member 23 and the intermediate member 22 communicates with the fuel tank through a hole 23a.

The liquid inlet 20a of the injection port is opened to the upper end of the upper member 21 where becoming flush with the outer plane of the cell main body 100. In the inner circumference of the upper member 21, two opposing protrusions 30 are provided, each projecting to the liquid inlet 20a. These two protrusions 30 function as bayonet coupler elements (key coupling joint elements), and are formed in position and shape to be coupled onto two grooves 60 in the nozzle outer circumference at the cartridge side.

As shown in FIGS. 6A and 6B, the rubber holder 25 as an elastic holder has a bellows section 25c in the middle of an upper part 25a and a lower part 25b. The bellows section 25c is undulated like ring or spiral so as to keep the passage for passing the liquid after compressive deformation. As a result, the methanol solution passes through the bellows section 25c smoothly and flows promptly, and the liquid can be injected in a short time without allowing leak. The rubber holder 25 is formed like a ring, its base end is fitted into the recess of the intermediate member 22, and its leading end 25a is extending toward the liquid inlet 20a. The diameter of the rubber holder leading end 25a is nearly the same as that of the cartridge nozzle 6. The rubber holder 25 is made of thermoplastic synthetic rubber having a hardness defined in a desired value range. When the nozzle 6 comes in contact with the rubber holder leading end 25a, the leading end 25a is deformed (compressed) elastically, and the nozzle 6 can be displaced.

The valve 26 includes a valve body 26f, a guide pin 26a, a needle 26b, a stopper 26d, a compression spring 27, a seal ring 28, and a valve seat 22a. The seal ring 28 of the valve body 26f biased by the compression spring 27 is pressed by the valve seat 22a, and in this state the valve compartment space 29 is shut off from the liquid inlet 20a. When the pressing force from the nozzle size becomes larger than the biasing force of the compression spring 27, the seal ring 28 is separated from the valve seat 22a, and the valve compartment space 29 communicates with the liquid inlet 20a.

The needle 26b is extended toward the liquid inlet 20a from the front end of the valve body 26f (upper side in the drawing). The principal part of the needle 26b is surrounded by the rubber holder 25. A leading end 26c of the needle is recessed to be fitted with the protruding needle leading end 8c of the cartridge nozzle side valve. When the needles 8b, 26b are brought closer butt to butt, if the abutting area is small, the needles are pushed in an offset state, and the existing passage may be disturbed. To prevent offset of the needles 8b, 26b, the needle leading end 8c of the cartridge nozzle side is formed in a convex shape, and the needle leading end 26c of the injection port side is formed in a concave shape, so that the both can be engaged with each other securely.

The guide pin 26a is extended toward the fuel tank (not shown) by way of the hole 23c of the lower member 23. A stopper 26d is provided in the rear end of the valve body 26f (lower side in the drawing), and an ascending stroke is defined so as to allow the valve body 26f to move in the axial direction. That is, if a force larger than the biasing force of the compression spring 27 is applied to the valve body 26f, the seal ring 28 is separated from the valve seat 22a, and the valve compartment space 29 is opened to communicate with the liquid inlet 20a. However, the valve body 26f is not elevated without limitation, but the stopper 26d hits against the bottom of the lower member 23, and the ascending motion of the valve body 26f is stopped.

A concave groove 38 is formed on the outer circumference of the needles 8b, 26b, and the guide pins 8a, 26a, as shown in FIG. 15, along the longitudinal axis, and a passage for passing liquid fuel is formed between inner walls of the nozzle 6. In the case of a coupler for a portable device, the entire structure needs to be formed in a small size, and thus it is hard to assure a passage. Accordingly, aside from the communication holes 7d, 23a, grooves or recesses for passage are formed in these valve elements 8a, 8b, 26a, 26b to cover for shortage of passages. FIG. 15 shows four concave grooves 38 formed in the valve elements 8a, 8b, 26a, 26b, but 1 to 3 grooves or 5 or more grooves may be formed.

The material of the container 2, the cartridge base 4, the cartridge nozzle 6, the plug 7, the valve bodies 8f, 26f, the intermediate member 22, and the lower member 23 is PEEK. The material of the upper member 21 and the ring 24 is stainless steel (SUS304). The material of the packing 5, the seal rings 11, 28, and the rubber holder 25 is thermoplastic synthetic rubber adjusted in hardness (EDPM 30 degrees, 50 degrees).

### (First Embodiment)

Referring now to FIGS. 7A to 10B, a bayonet coupler structure (key-key way coupling joint) consists of a cartridge and a cell main body of a first embodiment will be described below.

In the first embodiment, a groove 6g is provided in the outer circumference of a male type cartridge nozzle 6, and the protrusion 30 is provided in the inner circumference of a female type injection port 20 of the cell main body side. The cartridge nozzle 6 as a bayonet coupler element(key way coupling element) has two inverted L-figure grooves 60 provided in the outer circumference as shown in FIGS. 7A, 7B, and 8. The grooves 60 have protrusion insertion ports distributed by the 180-degree axial center as shown in FIG. 7A, and are formed in an inverted L figure (the shape on two-dimensional projection plane from the side) rotated and displaced by about 90 degrees clockwise in the circumferential direction when extended from the protrusion insertion ports in the axial direction as shown in FIG. 7B.

A bud 6p of a small protrusion is provided in the lateral wall near a groove terminal end 6e as shown in FIG. 9. The protrusion 30 being guided along the groove 60 rides over the bud 6p, and the user can feel the click (key locking sense of touch) of riding over the small protrusion like insetting of cap and bottle at his/her fingertip, and physically understands that the connection operation is finished. In the drawing, the bud 6p is provided in the upper side lateral wall, but may be provided in the lower side lateral wall, or both upper and lower side lateral walls.

The injection port 20 as a bayonet coupler element (key coupling element) has two protrusions 30 in the inner circumference as shown in FIGS. 10A and 10B. The protrusions 30 are distributed by the 180-degree axial center as shown in FIG. 10A, and are formed in the shape and size corresponding to the protrusion insertion ports (see FIG. 8) of the groove 60 as shown in FIG. 10B.

The protrusions 30 are fitted into the protrusion insertion ports of the grooves 60, and by sliding the cartridge nozzle 6 in the axial direction and rotating 90 degrees clockwise, the cartridge nozzle 6 and the injection port 20 are connected with each other.

Referring next to FIGS. 2 to 5, the operation of injecting liquid fuel into the female type injection port of the cell main body from the male type cartridge will be explained.

The cartridge nozzle 6 is inserted into the liquid inlet 20a of the injection port, the protrusion 30 of the injection port side is insetted with the groove 60 of the cartridge nozzle side, the nozzle 6 is moved linearly in the axial direction, and is moved in the circumferential direction. At this position, as shown in FIG. 2, the leading end of the nozzle 6 is abutting against the rubber holder leading end 25a (when the nozzle is inserted by 2.7 mm, it comes in contact with the rubber holder leading end 25a).

Next, when the nozzle 6 is slightly pushed in the axial direction (and circumferential direction), as shown in FIG. 3, the rubber holder leading end 25a is deformed elastically (compressed), and the needle leading end 8c of the cartridge side valve abuts against the needle leading end 26c of the injection port side valve (when the rubber holder is compressed by 0.5 mm, the valve needle ends 8c and 26c come in contact with each other).

By further pushing the nozzle 6 in the axial direction (and circumferential direction), the entire rubber holder 25 is compressed, the entire valve body of the cell main body side valve 26 is pushed down while resisting the biasing force of the compression spring 27, and the seal ring 28 is separated from the valve seat 22a. When pushed in to the bottom dead center until the stopper 26d comes in contact with the bottom plate of the injection port lower member 23, as shown in FIG. 4, the cell main body side valve 26 is opened to the full (when the rubber holder is compressed by 1.0 mm, the cell main body side valve 26 is opened fully).

By further pushing the nozzle 6 in the axial direction, the entire valve body of the cartridge side valve 8 is pushed up while resisting the biasing force of the compression spring 10, and the seal ring 11 is separated from the valve seat 4a. When pushed in to the top dead center until the stopper 8d abuts against the upper plate 7a of the plug, as shown in FIG. 5, the cartridge side valve 8 is opened to the full (when the rubber holder is compressed by 1.5 mm, the cartridge side valve 8 is opened fully).

In this manner, by pushing the cartridge nozzle 6, the cell main body side rubber holder 25 is deformed elastically, both the cartridge nozzle side valve 8 and the cell main body side valve 26 are opened, and the liquid fuel flows from the cartridge side to the cell main body side. The opening sequence of the cartridge side valve 8 and the cell main body side valve 26, that is, the opening and closing order of the valves depends on the relative magnitude of spring coefficients of the compression springs 10, 27 biasing the valves. When the spring coefficient of the compression spring 10 of the cartridge side is greater than the spring coefficient of the compression spring 27 of the cell main body side as in this embodiment, the cell main body side valve 26 opens first, and then the cartridge side valve 8 opens later. On the other hand, when the spring coefficient of the compression spring 27 of the cell main body side is greater than the spring coefficient of the compression spring 10 of the cartridge side, the cartridge side valve 8 opens first, and then the cell main body side valve 26 opens later.

According to the device of the embodiment, as described above, both the cartridge side and the cell main body side are sealed tightly. Therefore, there is no risk of liquid leak or vapor escape, the cartridge can be connected safely and securely to the injection port of the fuel cell easily by any user, and the liquid fuel can be injected into the fuel cell tank. Since the protrusion is provided inside of the injection port of the cell main body, it does not come in contact with other members, and is not broken or damaged, and it can be use for a long period of time without damage.

### (Second Embodiment)

Referring now to FIGS. 11A, 11B, 12A, and 12B, the structures of a cartridge and a cell main body coupler of a second embodiment will be described below.

In the second embodiment, a protrusion 62 is provided in a cartridge nozzle 6A, and a groove 32 is provided in an injection port 20A of the cell main body side. The cartridge nozzle 6A as a bayonet coupler element(key coupling element) has two protrusions 62 provided in the outer circumference as shown in FIG. 11A. The protrusions 62 are distributed by the 180-degree axial center in a nozzle main body 61 as shown in FIG. 11A, and provided in the outer circumference near the leading end of the nozzle main body 61 as shown in FIG. 11B.

The injection port 20A of the cell main body side as a bayonet coupler element(key way coupling element) has two grooves 32 in the inner circumference as shown in FIG. 12A. The grooves 32 have protrusion insertion ports distributed by the 180-degree axial center as shown in FIG. 12A, and are formed in an L figure (the shape on two-dimensional projection plane from the side) rotated and displaced by about 90 degrees clockwise in the circumferential direction after extended from the protrusion insertion ports in the axial direction as shown in FIG. 12B.

By such a bayonet coupler structure(structure of key-key way coupling joint), the cartridge nozzle is not easily detached from the injection port during fuel injection, the safety is increased, and the sealing performance of the grooves and protrusions is not deteriorated, so that the liquid leak preventive effect is enhanced.

### (Third Embodiment)

Referring now to FIGS. 13A, 13B, 14A, and 14B, the structures of a cartridge and a cell main body coupler of a third embodiment will be described below.

In the third embodiment, a protrusion 63 is provided in a cartridge nozzle 6B, and a groove 33 is provided in an injection port 20B of the cell main body side. The cartridge nozzle 6B as a bayonet coupler element(key coupling element) has three protrusions 63 provided in the outer circumference as shown in FIG. 13A. The protrusions 63 are distributed by the 120-degree axial center in the nozzle main body 61 as shown in FIG. 13A, and provided in the outer circumference near the leading end of the nozzle main body 61 as shown in FIG. 13B.

The injection port 20B of cell main body side as a bayonet coupler element(key way coupling element) has the three grooves 33 in the inner circumference as shown in FIG. 14A. The grooves 33 have protrusion insertion ports distributed by the 120-degree axial center as shown in FIG. 14A, and are formed in an oblique linear shape or spiral linear shape (the shape on two-dimensional projection plane from the side) rotated and displaced by about 45 degrees clockwise in the circumferential direction after extended from the protrusion insertion ports in the axial direction as shown in FIG. 14B.

Also by such a bayonet coupler structure(structure of key-key way coupling joint), the cartridge nozzle is not easily detached from the injection port during fuel injection, the safety is increased, and the sealing performance of the grooves and protrusions is not deteriorated, so that the liquid leak preventive effect is enhanced.

Referring to FIG. 16, a valve of a device 1A in another embodiment will be described.

In the liquid injection device 1A of the embodiment, a cartridge side valve 8A is improved. That is, the base end of a seal ring holding groove 81 is smaller in diameter than the leading end, and a seal ring 11A of irregular section is fitted thereto. The cross sectional shape of the seal ring 11A is, for example, substantially triangular, so that the seal ring 11A may not be easily detached from the valve body 8f. When this seal ring holding groove 81 is formed in a taper, and the seal ring 11A has an irregular tapered sectional shape corresponding to this tapered surface, the seal ring 11A does not easily slip out of the valve body 8f.

Although not shown, the same effects as described above are obtained when the seal ring holding groove of the cell main body side valve 26 is formed in a taper so that the base end side is smaller in diameter than the leading end side, and an O-ring 28 to be fitted thereto is formed as a seal ring of irregular section (see a seal ring 28A in FIGS. 17 and 18).

### (Fourth Embodiment)

Referring to FIGS. 17 and 18, a liquid injection device having the structures of a cartridge and a cell main body coupler in a fourth embodiment will be described.

In the liquid injection device of the embodiment, a plurality of protrusions 130 are provided in the inner circumference of a nozzle 106 of a female type cartridge 101, and a plurality of grooves 160 are provided in the outer circumference of a liquid inlet 121 of a male type injection port 120. The grooves 160 may be formed in any one of the L figure groove, inverted L figure groove, J figure groove, and linear spiral groove mentioned above.

The cartridge 101 includes a container 102 for defining a storage space 103 containing high concentration methanol as liquid fuel, a valve case 107 inserted in an opening 102a formed at one end side of the container 102, a rubber holder case 111 coupled to one end side of the valve case 107, and a cartridge base 112 having a nozzle 106 coupled to the rubber holder case 111. The container 102 may be formed in cylinder, spindle, flat tube, square tube, or any other shape. The cartridge base 112 and the cartridge nozzle 106 are formed integrally. The cartridge nozzle 106 is extended outward from the cartridge base 114. The integrated product of the base 112/nozzle 106 and the end portion of the container opening 102a are sealed by a rubber packing 105.

The cartridge nozzle 106 includes a nozzle main body 106b, a valve 108, a plug 107, a compression spring 110, and a seal ring 11A. In the inner circumference of the nozzle main body 106b, two protrusions 130 are provided as bayonet coupler elements(key coupling elements). A needle (valve stem) 108b of the valve 108 is inserted in the inside passage of the nozzle main body 106b. The plug 107 surrounds the valve body 108f of the valve 108, and defines a valve compartment space 109. The compression spring 110 biases the valve body 108f toward the valve seat 104a. The seal ring 11A is held in a holding groove 108h of the valve body 108f, and is pressed against the valve seat 104a by the biasing force of the compression spring 110. The seal ring 11A has an irregular section (substantially triangular section). When the seal ring 11A is forcibly separated from the valve seat 104a, a liquid inlet 106c is opened, and liquid flows toward a liquid outlet 106a.

The rubber holder case 111 is detachably engaged with the inside of the nozzle of the cartridge base 112. The valve case 107 is detachably engaged with the upper end of the rubber holder case 111 of nearly the same diameter. The material of the valve case 107 and the rubber holder case 111 is a thin resin material (for example, PEEK) having a certain flexibility. On the other hand, the nozzle 106 and the cartridge base 112 are thicker than the cases 107, 111 because a certain rigidity is required.

As shown in FIGS. 6A and 6B, a rubber holder 125 as an elastic holder has a bellows section 125c provided in the middle of an upper part 125a and a lower part 125b. The bellows section 125c is undulated in a ring or spiral form so as to keep a sufficient passage for passing the liquid even after compressive deformation. Accordingly, the methanol solution passes through the bellows section 125c, and promptly and smoothly flows through without leaking, to be injected in a short time. The rubber holder 125 is formed of nonplastic synthetic rubber defined in hardness in a specified value range. When a liquid receiving part 121 of the cell main body side comes in contact with the rubber holder leading end 125a, the leading end 125a is deformed elastically (compressed), and the nozzle 106 can be displaced.

When assembling them, the valve body 108f is biased by the spring 110 and incorporated in the case 107, the flange of the rubber holder 125 is fitted into the recess of the case 111, the valve case 107 is screwed into the rubber holder case 111, the flange of the case 111 is fitted into the rubber packing 105 adhered to the cartridge base 112, the case 111 is screwed into the base 112, and finally the base 112 is adhered to, and/or crimped and/or engaged with the container opening 102a.

The valve 108 includes a needle 108b extended from the front end of the valve body 108f (lower side in the drawing), and a guide pin 108a extended from the rear end of the valve body 108f (upper side in the drawing). The needle 108b is elevatably inserted in the passage of the nozzle 106. The length of the needle 108b is nearly equal to the overall length of the passage of the nozzle 106. However, in a non-use state, that is, when the cartridge 101 is not connected to the cell main body 100, the length is preferably defined such that the leading end 108c of the needle is slightly retracted from the liquid discharge port 106a of the nozzle. It is hence effective to avoid damage of the needle leading end 108c, prevent invasion of foreign matter such as dust from the liquid discharge port 106a into the nozzle passage, and prevent accidental opening of the valve.

The guide pin 108a is extended from the rear end of the valve body 108f toward the container 2, and projects into the liquid storage space 103 through a hole 107c in the middle of the top of the case 107. A plurality of communication holes 107d are opened in an upper plate 107a of the valve case, and liquid fuel flows into the vale compartment space 109 from the liquid storage space 103 through these communication holes 107c, 107d.

A stopper 108d is provided in the rear end of the valve body 108f, and an ascending stroke is defined for allowing the valve body 108f to move in the axial direction (Z-direction). That is, when a force larger than the biasing force of the compression spring 110 is applied to the valve body 108f, the seal ring 11A is separated from the valve seat 111a, the liquid inlet is opened, and the valve compartment space 109 communicates with the liquid discharge port 106a. In this case, the valve body 108f does not ascend without limitation, but the ascending motion of the valve body 108f is stopped when the stopper 180d abuts against the upper plate 107a of the valve case.

The compression spring 110 is substantially the same as that used in the first embodiment. One end of the compression spring 110 is affixed to the inside of the upper plate 107a of the valve case, and the other end thereof is affixed to the small flange of the valve body 108f.

The seal ring 11A is made of nonplastic synthetic rubber or elastomer free from swelling or dissolving in high concentration methanol solution, and is an O-ring of a substantially triangular irregular section. This seal ring 11A of irregular section is fitted in the holding groove formed in the lower part of the small flange of the valve body 108f.

Next, the injection port 120 of the fuel cell main body side will be explained below.

The injection port 120 includes a liquid receiving part 121 projecting to the center of the liquid inlet 120a, a valve case 122 formed integrally with the liquid receiving part 121, a lower member 123 having a plurality of holes 123a communicating with the fuel tank (not shown), a valve 126, a compression spring 127 for thrusting the valve 126, a seal ring 28A held in a holding groove of the valve 126, and a plurality of grooves 160 as bayonet coupler elements. The valve case 122 is screwed into the recess of the fuel cell main body 100, and is entirely buried in the fuel cell main body. A fuel tank not shown is provided in the fuel cell main body 100, and a valve compartment space 129 defined by the lower member 123 and the valve case 122 communicates with the fuel tank through the holes 123a.

In the outer circumference of the liquid receiving part 121 of the injection port, two grooves 160 distributed by the 180-degree axial center are formed. These two grooves 160 function as bayonet coupler elements, and formed in position and shape to be fitted respectively with two protrusions 130 of the female type cartridge nozzle 106.

The valve 126 includes a guide pin 126a, a needle 126b, a stopper 126d, a compression spring 127, a seal ring 28A, and a valve seat 122a. While the seal ring 28A is pressed against the valve seat 122a, the valve compartment space 129 is cut off from the liquid receiving part 121. When the pushing force from the nozzle side becomes larger than the biasing force of the compression spring 127, the seal ring 28A is separated from the valve seat 122a, and the valve compartment space 129 communicates with the liquid receiving part 121.

The needle 126b is extended from the upper part of the valve 126 toward the liquid receiving part 121. The principal part of the needle 126b is surrounded by the liquid receiving part 121. A leading end 126c of the needle is formed in a recess, and is fitted with the convex needle leading end 108c of the cartridge nozzle side valve. When the needles 108b and 126b are brought closer butt to butt, if the abutting area is small, they are pushed in an offset state, and the passage may not be assured securely. To prevent offset of the needles 108b and 126b, the needle leading end 108c of the cartridge nozzle side is formed in a recess, and the needle leading end 126c of the injection port side is formed in a convex profile, so that the both can be engaged with each other securely.

The guide pin 126a is projecting toward the fuel tank (not shown) through the communication holes 123c of the lower member 123. A stopper 126d is provided in the rear end of the valve body 126f, and an ascending stroke is defined for allowing the valve 126 to move in the axial direction. That is, when a force larger than the biasing force of the compression spring 127 is applied to the valve body 126f, the seal ring 28A is separated from the valve seat 122a, and the valve compartment space 129 communicates with the liquid receiving part 121. In this case, the valve body 126f is not lifted without limitation, but the ascending motion of the valve body 126f is stopped when the stopper 126d abuts against the bottom of the lower member 123.

In the outer circumference of the needles 108b, 126b, and the guide pins 108a, 126a, as shown in FIG. 15, a concave groove 38 is formed along the longitudinal axis, and a passage for passing liquid fuel is formed between inner walls of the nozzle 106. In the case of a coupler for a portable device, the entire structure needs to be formed in a small size, and thus it is hard to assure a passage. Accordingly, aside from the communication holes 107d, 123a, grooves or recesses for passages are formed in these valve elements 108a, 108b, 126a, 216b to cover for shortage of passages.

Referring to FIGS. 17 and 18, the operation will be described below in the case of injecting liquid fuel into the male type injection port of the cell main body from the female type cartridge.

The cartridge nozzle 106 is inserted into the liquid inlet 120a of the injection port, the protrusion 130 of the nozzle side is insetted with the groove 160 of the injection port side, the nozzle 106 is moved linearly in the axial direction, and then is moved in the circumferential direction. At this position, the leading end of the nozzle 106 is abutting against the rubber holder leading end 125a (when the nozzle is inserted by 2.7 mm, the rubber holder comes in contact with the liquid receiving part).

Next, when the nozzle 106 is slightly pushed in the axial direction (and also circumferential direction), the rubber holder leading end 125a is deformed elastically (compressed), and the needle leading end 108c of the cartridge side valve abuts against the needle leading end 126c of the injection port side valve (when the rubber holder is compressed by 0.5 mm, the valve needles come in contact with each other).

By further pushing the nozzle 106 in the axial direction (and also circumferential direction), the entire rubber holder 125 is compressed, the entire valve body 126f is pushed down while resisting the biasing force of the compression spring 127, and the seal ring 28A is separated from the valve seat 122a. When pushed in to the bottom dead center until the stopper 126d comes in contact with the bottom plate of the injection port lower member 123, the cell main body side valve 126 is opened to the full (when the rubber holder is compressed by 1.0 mm, the cell main body side valve is opened fully).

By further pushing the nozzle 106 in the axial direction, the entire valve body 108f is pushed up while resisting the biasing force of the compression spring 110, and the seal ring 11A is separated from the valve seat 111a. When pushed in to the top dead center until the stopper 108d abuts against the upper plate 107a of the valve case, as shown in FIG. 18, the cartridge side valve 108 is opened to the full (when the rubber holder is compressed by 1.5 mm, the cartridge side valve is opened fully).

In this manner, by pushing the cartridge nozzle 106, the rubber holder 125 is deformed elastically, both the valves 108 and 126 are opened, and liquid fuel flows from the cartridge side to the cell main body side. The opening sequence of the cartridge side valve 108 and the cell main body side valve 126, that is, the opening and closing order of the valves depends on the relative magnitude of spring coefficients of the compression springs 110, 127 biasing the valves. When the spring coefficient of the compression spring 110 of the cartridge side is greater than the spring coefficient of the compression spring 127 of the cell main body side as in this embodiment, the cell main body side valve 126 opens first, and then the cartridge side valve 108 opens later. On the other hand, when the spring coefficient of the compression spring 127 of the cell main body side is greater than the spring coefficient of the compression spring 110 of the cartridge side, the cartridge side valve 108 opens first, and then the cell main body side valve 126 opens later.

Referring now to FIGS. 19A to 26D, various aspects of compatibility between the cartridge and the fuel cell will be explained.

### (Fifth Embodiment)

In this embodiment, an example of compatibility between two fuel cells and two cartridges will be explained. As shown in FIGS. 19A and 19B, injection ports 20C1, 20C2 of the cell main body side are of female type, and a small protrusion 30S and a large protrusion 30L are provided in the inner circumferences of the female type injection ports 20C1, 20C2, respectively. As shown in FIGS. 19C and 19D, cartridge side nozzles 6Cl, 6C2 are of male type, and a narrow groove 60S and a wide groove 60L are provided in the outer circumferences of the male type cartridge nozzles 6C1, 6C2, respectively.

The cartridge nozzle 6C2 in FIG. 19D can be connected to either the injection port 20C1 in FIG. 19A or the injection port 20C2 in FIG. 19B (compatible). By contrast, the cartridge nozzle 6C1 in FIG. 19C can be connected to the injection port 20C1 in FIG. 19A, but not to the injection port 20C2 in FIG. 19B (not compatible).

Accordingly, in the fuel cell driven only by low concentration methanol, high concentration methanol will not be injected by mistake. That is, the injection port 20C2 in FIG. 19B is used in the cell main body driven by low concentration methanol (concentration of about 5% or 30%), and the cartridge nozzle 6C1 in FIG. 19C is used in the storage container of high concentration methanol (concentration of 100% or 64%). In this case, since the both are not compatible, accidents of the cell main body due to fuel refill error can be prevented.

### (Sixth Embodiment)

Also in this embodiment, an example of compatibility between two fuel cells and two cartridges will be explained. As shown in FIGS. 20A and 20B, injection ports 20D1, 20D2 of the cell main body side are of male type, and a narrow groove 160S and a wide groove 160L are provided in the outer circumferences of the injection ports 20D1, 20D2, respectively. As shown in FIGS. 20C and 20D, cartridge side nozzles 6D1, 6D2 are of female type, and a small protrusion 30S and a large protrusion 30L are provided in the inner circumferences of the cartridge nozzles 6D1, 6D2, respectively.

The cartridge nozzle 6D1 in FIG. 20C can be connected to either the injection port 20D1 in FIG. 20A or the injection port 20D2 in FIG. 20B (compatible). By contrast, the cartridge nozzle 6D2 in FIG. 20D can be connected to the injection port 20D2 in FIG. 20B, but not to the injection port 20D1 in FIG. 20A (not compatible).

Accordingly, in the fuel cell driven only by low concentration methanol, high concentration methanol will not be injected by mistake. That is, the injection port 20D2 in FIG. 20B is used in the cell main body driven by low concentration methanol (concentration of about 5% or 30%), and the cartridge nozzle 6D2 in FIG. 20D is used in the storage container of high concentration methanol (concentration of 100% or 64%). In this case, since the both are not compatible, accidents of the cell main body due to fuel refill error can be prevented.

### (Seventh Embodiment)

In this embodiment, an example of compatibility between three fuel cells and three cartridges will be explained. As shown in FIGS. 21A, 21B, and 21C, injection ports 20E1, 20E2, 20E3 of the cell main body side are of female type, and a small protrusion 30S or a large protrusion 30L is provided in the inner circumference of the injection ports 20E1, 20E2, 20E3 selectively at two positions each. As shown in FIGS. 22A, 22B, and 22C, cartridge side nozzles 6E1, 6E2, 6E3 are of male type, and a narrow groove 60S or a wide groove 60L is provided in the outer circumference of the cartridge nozzles 6E1, 6E2, 6E3 selectively at two positions each. Two protrusions are distributed symmetrically on the axis in the cell main body injection port by 180 degrees, and two grooves are disposed symmetrically on the axis in the cartridge nozzle by 180 degrees.

The cartridge nozzle 6E3 in FIG. 22C can be connected to any one of the injection ports 20E1, 20E2, 20E3 in FIGS. 21A, 21B, and 21C (compatible). By contrast, the cartridge nozzle 6E2 in FIG. 22B can be connected to the injection port 6E1 in FIG. 22A and the injection port 6E2 in FIG. 22B (compatible), but not to the injection port 6E3 in FIG. 22C (not compatible). The cartridge nozzle 6E1 in FIG. 22A can be connected only to the injection port 6E1 in FIG. 22A, but not to the injection port 6E2 in FIG. 22B or the injection port 6E3 in FIG. 22C (not compatible).

### (Eighth Embodiment)

In this embodiment, an example of compatibility between four fuel cells and four cartridges will be explained. As shown in FIGS. 23A, 23B, 23C, and 23D, injection ports 20F1, 20F2, 20F3, 20F4 of the cell main body side are of female type, and a small protrusion 30S or a large protrusion 30L is provided in the inner circumference of injection ports 20F1, 20F2, 20F3, 20F4 selectively at two positions each. As shown in FIGS. 24A, 24B, 24C, and 24D, cartridge side nozzles 6E1, 6E2, 6E3, 6E4 are of male type, and a narrow groove 60S or a wide groove 60L is provided in the outer circumference of the cartridge nozzles 6E1, 6E2, 6E3, 6E4 selectively at two positions each. Two protrusions and two grooves are distributed asymmetrically on the central axis.

The cartridge nozzle 6F4 in FIG. 24D can be connected to any one of the injection ports 20F1, 20F2, 20F3, 20F4 in FIGS. 23A to 23D (compatible). By contrast, the cartridge nozzle 6F3 in FIG. 24C can be connected to the injection port 20F1 in FIG. 23A and the injection port 20F3 in FIG. 23C (compatible), but not to the injection port 20F2 in FIG. 23B or the injection port 20F4 in FIG. 23D (not compatible). The cartridge nozzle 6F2 in FIG. 24B can be connected to the injection port 20F1 in FIG. 23A and the injection port 20F2 in FIG. 23B (compatible), but not to the injection port 20F3 in FIG. 23C or the injection port 20F4 in FIG. 23D (not compatible). The cartridge nozzle 6F1 in FIG. 24A can be connected only to the injection port 20F1 in FIG. 23A, but not to the injection ports 6F2, 6F3, 6F4 in FIGS. 23B to F23D (not compatible).

Combination of grooves and protrusions in asymmetrical configuration of this embodiment is broader in variation than combination of grooves and protrusions in symmetrical configuration of the seventh embodiment, and it can be applied not only in identification of methanol concentration, but also in identification of methanol and other liquid fuels, or identification of manufacturers.

### (Ninth Embodiment)

Also in this embodiment, an example of compatibility between four fuel cells and four cartridges will be explained. As shown in FIGS. 25A, 25B, 25C, and 25D, injection ports 20G1, 20G2, 20G3, 20G4 of the cell main body side are of female type, and a small protrusion 30S or a large protrusion 30L is provided in the inner circumference of injection ports 20G1, 20G2, 20G3, 20G4 selectively at three positions each. As shown in FIGS. 26A, 26B, 26C, and 26D, cartridge side nozzles 6G1, 6G2, 6G3, 6G4 are of male type, and a narrow groove 60S or a wide groove 60L is provided in the outer circumference of the cartridge nozzles 6G1, 6G2, 6G3, 6G4 selectively at three positions each. In this example, three protrusions are distributed symmetrically on the axis in the cell main body injection ports by 120 degrees, and three grooves are distributed symmetrically on the axis in the cartridge nozzles by 120 degrees.

The cartridge nozzle 6G4 in FIG. 26D can be connected to any one of the injection ports 20G1, 20G2, 20G3, 20G4 in FIGS. 25A to 25D (compatible). By contrast, the cartridge nozzle 6G3 in FIG. 26C can be connected to the injection ports 20G1, 20G2, 20G3 in FIGS. 25A to 25C (compatible), but not to the injection port 20G4 in FIG. 25D (not compatible). The cartridge nozzle 6G2 in FIG. 26B can be connected to the injection port 20G1 in FIG. 25A and the injection port 20G2 in FIG. 25B (compatible), but not to the injection port 20G3 in FIG. 25C or the injection port 20G4 in FIG. 25D (not compatible). The cartridge nozzle 6G1 in FIG. 26A can be connected only to the injection port 20G1 in FIG. 25A, but not to any one of the injection ports 20G2, 20G3, 20G4 in FIGS. 25B to 25D (not compatible).

According to the invention, if the user does not know the components or concentration of liquid fuel usable in the fuel cell, or if the liquid contained in the cartridge is unknown, the user can actually insert the cartridge nozzle into the injection port of the fuel cell main body, or compare the grooves and protrusions formed in the cartridge nozzle and cell main body injection port, in order to readily judge whether the liquid fuel is usable or not.

The foregoing embodiments relate to the liquid injection system for injecting liquid fuel such as methanol from the cartridge into the tank of the fuel cell. However, the invention is not limited to this application alone, and may be also applied to a water injection system for replenishing water from the cartridge into the solid electrolyte film of the fuel cell. Even if the fuel cell is left for a long period of time after stopping power generation operation, the solid electrolyte film in the fuel cell can be humidified by injecting a proper amount of water by using the water injection system. As a result, the fuel cell can be restarted easily. After starting power generation operation, water is produced by dynamic reaction, and power generation operation by high concentration fuel continues. Therefore, the amount of water to be prepared in the cartridge may be smaller than the amount of liquid fuel.

The foregoing embodiments relate to the liquid injection system for injecting only liquid fuel. However, the invention is not limited to this application alone, and may be also applied to a liquid injection system capable of injecting both liquid fuel and water. That is, the cartridge is partitioned into two compartments, one compartment is filled with liquid fuel and the other compartment is filled with water, and the liquid fuel and water may be supplied into the fuel cell main body separately from different nozzles provided in the cartridge main body. In this case, however, the injection ports at the fuel cell main body side must be provided separately for liquid fuel and water.

The invention is applied to injection of liquid such as high concentration methanol safely into small-sized fuel cell used as a built-in power source of portable telephone, portable audio system, notebook personal computer, portable game machine, and other mobile devices. Its effect is particularly outstanding when using a satellite type cartridge, that is, one cartridge possibly used in plural devices.

The liquid fuel of the invention is not limited to methanol fuel, but includes, for example, ethanol fuel such as aqueous ethanol solution and pure ethanol, propanol fuel such as aqueous propanol solution and pure propanol, glycol fuel such as aqueous glycol solution and pure glycol, dimethyl ether, formic acid, and other liquid fuels. Any other liquid fuels suited to the fuel cells may be contained.

According to the invention, the liquid fuel can be injected into the fuel cell tank easily by anyone, by connecting the cartridge securely and safely to the injection port of the fuel cell without causing liquid leak. According to the invention, if the user does not know the components or concentration of liquid fuel usable in the fuel cell, or if the liquid contained in the cartridge is unknown, the user can actually insert the cartridge nozzle into the injection port of the fuel cell main body, or compare the grooves and protrusions formed in the cartridge nozzle and cell main body injection port, in order to readily judge whether the liquid fuel is usable or not.

Especially in a satellite type cartridge, that is, one cartridge possibly used in plural devices, very effective means is provided from the viewpoint of compatibility and prevention of wrong use.

## Claims

1. A liquid injection device of a fuel cell which inserts a cartridge nozzle in an injection port of a fuel cell main body, pushes in the nozzle to open both a valve of the nozzle and a valve of the injection port, and injects liquid into the fuel cell from the cartridge through the nozzle and the injection port, the device **characterized by** comprising:
a protrusion provided in either the injection port or the cartridge nozzle; and
a groove provided in either the injection port or the cartridge nozzle so as to be fitted with the protrusion, fitted with the protrusion when the cartridge nozzle is inserted into the injection port, and guiding the protrusion when the cartridge nozzle is pushed into an axial direction.

2. The liquid injection device according to claim 1, wherein liquid contained inside is specified and the cartridge is individually identified, by varying at least one selected from the group consisting of the number, shape and position of the protrusions or grooves of the cartridge nozzle.

3. The liquid injection device according to claim 2, wherein a type and concentration of the liquid contained in the cartridge can be identified on the basis of the number, shape and position of the protrusions or grooves.

4. The liquid injection device according to claim 2, wherein a width of a single protrusion or widths of a plurality of protrusions or grooves in a circumferential direction is varied, as means for varying the shape of the protrusions or grooves.

5. The liquid injection device according to claim 2, wherein a plurality of protrusions or grooves are disposed symmetrically or asymmetrically with respect to a central axis of the cartridge nozzle, as means for varying the position of the protrusions or grooves.

6. The liquid injection device according to claim 1, wherein the cartridge nozzle is of male type, and the injection port is of female type.

7. The liquid injection device according to claim 1, wherein the cartridge nozzle is of female type, and the injection port is of male type.

8. The liquid injection device according to claim 1, wherein the protrusion is provided in an inner circumference of the injection port, and the groove is formed in an outer circumference of the cartridge nozzle.

9. The liquid injection device according to claim 1, wherein the protrusion is provided in the outer circumference of the cartridge nozzle, and the groove is formed in the inner circumference of the injection port.

10. The liquid injection device according to claim 1, wherein the groove guides the protrusion in the axial direction, and guides the protrusion by displacing the protrusion in the circumferential direction so that the cartridge nozzle is locked in the injection port.

11. The liquid injection device according to claim 1, further comprising a small protrusion which projects from a side peripheral wall of the groove near a terminal end of the groove, and allows the protrusion guided along the groove to ride over.

12. The liquid injection device according to claim 1, wherein wet ends of the injection port and the cartridge nozzle coming in contact with liquid are made of resin, and dry ends of the injection port and the cartridge nozzle not coming in contact with liquid are made of a more rigid material than the resin.

13. The liquid injection device according to claim 12, wherein the dry end is made of metal or alloy having corrosion resistance to the liquid.

14. The liquid injection device according to claim 1, wherein the groove is composed of a plurality of grooves distributed by an axial center in the injection port or the cartridge nozzle, and the terminal end is rotated and displaced by 45 degrees to 90 degrees in the circumferential direction along the inner circumference of the injection port and the outer circumference of the cartridge nozzle.

15. The liquid injection device according to claim 1, wherein the groove is formed in any one of L figure, inverted L figure, J figure, inverted J figure, and oblique straight line, in the shape of a two-dimensional projection plane from the side.

16. The liquid injection device according to claim 1, wherein the injection port is provided behind the protrusion or the groove, and has an elastic holder which comes in contact with a leading end of the nozzle when the cartridge nozzle is inserted in the injection port, and which is deformed elastically while keeping sealing performance when the nozzle is pushed in the axial direction.

17. The liquid injection device according to claim 16, wherein the elastic holder is formed in a telescopic bellows shape.

18. The liquid injection device according to claim 1, further comprising:
a tapered holding groove formed in a valve body of the valve of the cartridge nozzle; and
a seal ring of an irregular section held in the holding groove.

19. The liquid injection device according to claim 1, further comprising:
a first needle disposed in a passage of the cartridge nozzle and having a convex or concave leading end; and
a second needle disposed in a passage of the injection port and having a concave or convex leading end to be fitted with the leading end of the first needle.

20. The liquid injection device according to claim 19, wherein the first and second needles each have a concave groove extending along a longitudinal axis, a first passage for passing liquid is formed between the recess of the first needle and the inner peripheral wall of the cartridge nozzle, and a second passage for passing liquid is formed between the recess of the second needle and the inner peripheral wall of the injection port.

21. A fuel cell having an injection port into which a nozzle of a fuel cartridge is inserted for replenishing liquid fuel, comprising:
a bayonet coupler element provided in an inner peripheral wall which defines the injection port, fitted to an outer circumference of the nozzle when the nozzle of the fuel cartridge is inserted into the injection port, and guiding the nozzle when the nozzle is further pushed in an axial direction.

22. The fuel cell according to claim 21, wherein the bayonet coupler element is at least one groove or protrusion which guides the nozzle in the axial direction and circumferential direction.

23. A fuel cartridge provided with a nozzle to be inserted into an injection port of a fuel cell for replenishing liquid fuel, comprising:
a bayonet coupler element provided in an outer peripheral wall of the nozzle, fitted to an inner circumference of the injection port when the nozzle is inserted into the injection port of the fuel cell, and guided into the injection port when the nozzle is further pushed in an axial direction.

24. The fuel cartridge according to claim 23, wherein the bayonet coupler element is at least one groove or protrusion to be guided into the injection port in the axial direction and circumferential direction.
